# EUROPÄISCHE PATENTSCHRIFT

(11) **EP 3 433 119 B1**
(45) Veröffentlichungstag und Bekanntmachung des Hinweises auf die Patenterteilung: **12.05.2021**
(21) Anmeldenummer: 17708675.8
(22) Anmeldetag: 02.03.2017
(51) Int. Cl.: B60K 6/365, B60K 1/00, B60K 6/387

(54) **ANTRIEBSVORRICHTUNG, INSBESONDERE FÜR EIN ELEKTROFAHRZEUG**
DRIVE DEVICE, IN PARTICULAR FOR AN ELECTRIC VEHICLE
DISPOSITIF DE PROPULSION NOTAMMENT POUR UN VÉHICULE ÉLECTRIQUE

(30) Priorität: 23.03.2016 DE 102016003575
(43) Veröffentlichungstag der Anmeldung: 30.01.2019
(73) Patentinhaber: Daimler AG, 70372 Stuttgart (DE)
(72) Erfinder: SCHILDER, Tobias, 70794 Filderstadt (DE); BOU ROMANO, Josep Maria, 70188 Stuttgart (DE); RIEDL, Klaus, 72074 Tübingen (DE); HAERTER, Tobias, 70174 Stuttgart (DE)
(74) Vertreter: JENSEN & SON
(86) Internationale Anmeldenummer: PCT/EP2017/000281
(87) Internationale Veröffentlichungsnummer: WO 2017/162327

(56) Entgegenhaltungen:
- CN-A- 1 898 482
- DE-A1-102008 038 085
- DE-A1-102012 016 664
- DE-A1-102013 214 317
- FR-A1- 2 847 321

## Beschreibung

Die Erfindung betrifft eine Antriebsvorrichtung für ein Kraftfahrzeug, insbesondere ein Elektrofahrzeug oder ein Kraftfahrzeug mit zumindest einer rein elektrisch angetriebenen Antriebsachse.

Aus der WO 2012/010340 A1 ist bereits eine Antriebsvorrichtung für ein Elektrofahrzeug, bekannt, die einen Elektromotor, einen Achsantrieb und ein zwischen dem Elektromotor und dem Achsantrieb angeordnetes Mehrstufengetriebe aufweist.

Aus der DE 25 21 831 A1 ist eine Antriebsvorrichtung bekannt, welche ein Mehrstufengetriebe mit drei Planetenradstufen aufweist, wobei ein Getriebeeingangselement permanent drehfest mit einem Sonnenrad der ersten Planetenradstufe verbunden ist, ein Getriebeausgangselement permanent drehfest mit dem Planetenradträger der dritten Planetenradstufe verbunden ist, sowie der Planetenradträger der ersten Planetenradstufe und das Sonnenrad der dritten Planetenradstufe permanent drehfest miteinander verbunden sind.

Schließlich ist aus der gattungsgemäßen FR 2 847 321 A1 eine Antriebsvorrichtung bekannt, welche alle Merkmale des Oberbegriffes des Anspruchs 1 zeigt.

Der Erfindung liegt insbesondere die Aufgabe zugrunde, eine weiterentwickelte Antriebsvorrichtung für ein Elektrofahrzeug bereitzustellen. Sie wird gemäß der Erfindung durch die Merkmale des Anspruchs 1 gelöst. Weitere Ausgestaltungen ergeben sich aus den Unteransprüchen.

Es wird von einer Antriebsvorrichtung ausgegangen, insbesondere für ein Elektrofahrzeug, mit zumindest einem Elektromotor, mit zumindest einem Achsantrieb und mit einem zwischen dem Elektromotor und dem Achsantrieb angeordneten, zumindest konstruktiv zur Schaltung von zwei Vorwärtsgetriebegängen vorgesehenen Mehrstufengetriebe, das genau drei wirkungsmäßig miteinander verbundene Planetenradstufen mit Sonnenrädern, Hohlrädern und Planetenradträgern, zumindest zwei Schalteinheiten, ein Getriebeeingangselement zur drehfesten Anbindung des Elektromotors sowie ein Getriebeausgangselement zur drehfesten Anbindung des Achsantriebs aufweist, wobei das Getriebeeingangselement permanent drehfest mit dem Sonnenrad der ersten Planetenradstufe verbunden ist, das Getriebeausgangselement permanent drehfest zumindest mit dem Planetenradträger der dritten Planetenradstufe verbunden ist sowie zumindest der Planetenradträger der ersten Planetenradstufe und das Sonnenrad der dritten Planetenradstufe permanent drehfest miteinander verbunden sind.

Erfindungsgemäß sind der Planetenradträger (P22a; P22c; P22d) der zweiten Planetenradstufe (P2a; P2c; P2d) und der Planetenradträger (P32a; P32c; P32d) der dritten Planetenradstufe (P3a; P3c; P3d) permanent drehfest miteinander verbunden, oder es ist eine dritte Schalteinheit (S3b; S3e) dazu vorgesehen, den Planetenradträger (P22b; P22e) der zweiten Planetenradstufe (P2b; P2e) drehfest mit dem Planetenradträger (P32b; P32e) der dritten Planetenradstufe (P3b; P3e) zu verbinden.

Durch eine solche Ausgestaltung kann eine kompakte Antriebsvorrichtung für ein Elektrofahrzeug bereitgestellt werden, die eine vorteilhafte Anbindung des Elektromotors an den Achsantrieb ermöglicht. Durch das Mehrstufengetriebe können unterschiedliche Vorwärtsgetriebegänge bereitgestellt werden, durch die ein von dem Elektromotor abgegebenes Antriebsmoment vorteilhaft umgesetzt werden kann. Auf eine Schaltbarkeit von Rückwärtsgetriebegängen kann verzichtet werden, indem der Elektromotor für eine Drehrichtungsumkehr vorgesehen ist. Bauteilbelastungen können in dem vorgeschlagenen Mehrstufengetriebe durch dessen Grundstruktur zumindest teilweise gesenkt werden, wodurch insbesondere ein Leichtbau vereinfacht werden kann. Durch die unterschiedlich übersetzten Vorwärtsgetriebegänge kann der Elektromotor auch bei hohen Fahrzeuggeschwindigkeiten mit einem hohen Wirkungsgrad betrieben werden. Bei niedrigen Geschwindigkeiten kann ein Drehmoment des Elektromotors vorteilhaft umgesetzt werden. Übersetzungsverhältnisse der Vorwärtsgetriebegänge und/oder des Achsantriebs können zumindest teilweise an eine Ausgestaltung des Elektrofahrzeugs angepasst werden. Es kann eine flexible Antriebsvorrichtung bereitgestellt werden.

Unter einer "Antriebsvorrichtung mit zumindest einem Elektromotor, mit zumindest einem Achsantrieb und einem zwischen dem Elektromotor und dem Achsantrieb angeordneten Mehrstufengetriebe" soll in diesem Zusammenhang insbesondere eine Antriebsvorrichtung verstanden werden, die lediglich Elektromotoren zur Erzeugung eines Antriebsmoments aufweist. Insbesondere soll darunter eine von einer Brennkraftmaschine unabhängige Antriebsvorrichtung verstanden werden. Unter einem "Mehrstufengetriebe" soll in diesem Zusammenhang insbesondere ein zwischen dem Elektromotor und dem Achsantrieb angeordnetes Getriebe zur Schaltung der unterschiedlich übersetzten Vorwärtsgetriebegänge verstanden werden. Unter einer "Planetenradstufe" soll weiter insbesondere eine Zahnradstufe verstanden werden, die durch einen Zahneingriff zwischen einem Sonnenrad und einem von einem Planetenradträger geführten Planetenrad und/oder einen Zahneingriff zwischen einem von einem Planetenradträger geführten Planetenrad und einem Hohlrad definiert ist. Grundsätzlich können die Planetenradstufen zumindest teilweise einstückig ausgeführt werden. Insbesondere ist es denkbar, dass zwei der Planetenradstufen ein gemeinsames Hohlrad und getrennte Sonnenräder oder ein gemeinsames Sonnenrad und getrennte Hohlräder aufweisen. Unter einem "Achsantrieb" soll insbesondere eine Wirkverbindung zwischen dem Getriebeausgangselement des Mehrstufengetriebes und zumindest einem Antriebsrad des Kraftfahrzeugs verstanden werden. Der Achsantrieb kann für eine permanente drehfeste Verbindung zwischen dem Getriebeausgangselement und dem Antriebsrad vorgesehen sein. Alternativ kann der Achsantrieb auch ein Differentialgetriebe aufweisen, das dazu vorgesehen ist, zwei Antriebsräder parallel an das Getriebeausgangselement anzubinden.

Die Planetenradstufen sind im Folgenden mit "erste Planetenradstufe", "zweite Planetenradstufe" und "dritte Planetenradstufe" bezeichnet. Die Bezeichnungen "erste", "zweite" und "dritte" Planetenradstufe sind insbesondere zur Festlegung einer axialen Anordnung vorgesehen, wobei eine axiale Reihenfolge der Planetenradstufen von der Nummerierung abweichen kann. Grundsätzlich ist eine geänderte Anordnung der Planetenradstufen und/oder eine gestapelte Anordnung, bei der die Planetenradstufen zumindest teilweise radial ineinander geschachtelt sind, denkbar. Insbesondere durch eine räumliche Umordnung der Schalteinheiten, durch eine geänderte Anordnung von Getriebeelementen und/oder durch Vertauschung der Sonnenräder, Planetenräder und/oder Hohlräder sind verschiedene kinematisch äquivalente Getriebestrukturen realisierbar. Unter "kinematisch äquivalenten Getriebestrukturen" sollen dabei Getriebestrukturen verstanden werden, welche eine gleiche Anzahl von Schalteinheiten sowie identische Schaltschemata zur Schaltung der Vorwärtsgetriebegänge und der Rückwärtsgetriebegänge aufweisen.

Unter einer "Schalteinheit" soll weiter insbesondere eine Einheit mit genau zwei relativ zueinander drehbaren Kopplungselementen, die zur drehfesten Verbindung miteinander vorgesehen sind, verstanden werden. Eine Schalteinheit kann wahlweise als Kupplung oder Bremse ausgebildet werden. Unter einer Schalteinheit, die als "Kupplung" ausgebildet ist, soll insbesondere eine Schalteinheit verstanden werden, die in einem Leistungsfluss zwischen zwei der Planetenradstufen angeordnet ist und die dazu vorgesehen ist, ihre zwei drehbar angeordneten Kopplungselemente, die in einem geöffneten Zustand unabhängig voneinander verdrehbar sind, in einem geschlossenen Zustand drehfest miteinander zu verbinden. Unter einer Schalteinheit, die als "Bremse" ausgebildet ist, soll insbesondere eine Schalteinheit verstanden werden, die wirkungsmäßig zwischen einer der Planetenradstufen und einem Getriebegehäuse angeordnet ist und die dazu vorgesehen ist, ihr drehbares Kopplungselement, das in einem geöffneten Zustand unabhängig von dem Getriebegehäuse verdrehbar ist, in einem geschlossenen Zustand mit ihrem drehfest mit dem Getriebegehäuse verbundenen Kopplungselement drehfest zu verbinden. Unter "drehfest verbunden" soll insbesondere eine Verbindung verstanden werden, bei der ein Leistungsfluss über eine vollständige Umdrehung gemittelt mit einem unveränderten Drehmoment, einer unveränderten Drehrichtung und/oder einer unveränderten Drehzahl übertragen wird.

Unter einer Schalteinheit soll in diesem Zusammenhang insbesondere keine Kupplung verstanden werden, die einem durch die Planetenradstufen ausgebildeten Zahnradsatz vorgeschaltet oder nachgeschaltet ist. Unter einer "dem Zahnradsatz vorgeschalteten Kupplung" soll insbesondere eine Kupplung verstanden werden, die in zumindest einem Getriebegang in einem Leistungsfluss zwischen dem Elektromotor und dem Getriebeeingangselement angeordnet ist, wie beispielsweise eine Trennkupplung oder eine Anfahrkupplung. Unter einer "dem Zahnradsatz nachgeschalteten Kupplung" soll insbesondere eine Kupplung verstanden werden, die in zumindest einem Getriebegang in einem Leistungsfluss zwischen dem Getriebeausgangselement und einem Achsantrieb angeordnet ist, wie beispielsweise eine Allradkupplung. Grundsätzlich kann eine Schaltbarkeit des Mehrstufengetriebes durch eine dem Zahnradsatz vorgeschaltete oder nachgeschaltete Kupplungseinheit erhöht werden. Unter einem "Getriebeeingangselement " soll dabei insbesondere ein Getriebeelement, das zumindest konstruktiv zur drehfesten Anbindung eines Rotors des Elektromotors vorgesehen ist, verstanden werden. Unter einem "Getriebeausgangselement" soll insbesondere ein Getriebeelement, das zumindest konstruktiv zur drehfesten Anbindung eines Achsantriebs vorgesehen ist, verstanden werden. Unter einem "Getriebeelement" soll insbesondere eine Ausgestaltung verstanden werden, die zur permanenten drehfesten Verbindung zwischen den Sonnenrädern, Planetenradträgern, Hohlrädern und/oder Kopplungselementen vorgesehen ist.

Unter "zumindest konstruktiv" soll insbesondere verstanden werden, dass konstruktiv eine entsprechende Ausgestaltung vorgesehen ist, in einem eventuellen Ausführungsbeispiel aber von einer funktionellen Nutzung der konstruktiven Ausgestaltung abgesehen werden kann. Unter "konstruktiv zur Schaltung eines Getriebegangs vorgesehen" soll in diesem Zusammenhang insbesondere verstanden werden, dass mittels der Schalteinheiten und Planetenradstufen mechanisch ein entsprechender Getriebegang grundsätzlich bildbar ist, unabhängig davon, ob im Rahmen einer Schaltstrategie auf die Schaltung des Getriebegangs verzichtet wird oder nicht. Beispielsweise können in einer Ausgestaltung die Schalteinheiten konstruktiv zur Schaltung von mehr Vorwärtsgetriebegängen vorgesehen sein, als es sinnvoll sein kann, sie im Rahmen einer Betriebsstrategie für das Mehrstufengetriebe zu schalten.

Unter einem "Entkoppeln einer Planetenradstufe" soll insbesondere verstanden werden, dass die Planetenradstufe aus einer Übertragung eines Leistungsflusses zwischen dem Getriebeeingangselement und dem Getriebeausgangselement herausgenommen wird. Unter einer "Schalteinheit zum Entkoppeln einer Planetenradstufe" soll eine einzelne Schalteinheit verstanden werden, die lediglich dazu vorgesehen ist, das Sonnenrad, den Planetenradträger oder das Hohlrad der Planetenradstufe an die restlichen Planetenradstufen anzubinden. Ist die Schalteinheit geöffnet, ist das Sonnenrad, der Planetenradträger oder das Hohlrad relativ zu den Sonnenrädern, den Planetenradträgern und den Hohlrädern der restlichen Planetenradstufen sowie dem Getriebegehäuse frei drehbar, wodurch der entkoppelten Planetenradstufe eine Abstützung zur Übertragung eines Drehmoments fehlt.

Vorzugsweise ist ein Teil der Schalteinheiten formschlüssig ausgebildet. Dadurch kann ein Schleppverlust gering gehalten werden, wodurch ein Leistungsverlust innerhalb des Mehrstufengetriebes vorteilhaft verringert werden kann. Unter einer "formschlüssig ausgebildeten Schalteinheit" soll dabei insbesondere eine Schalteinheit verstanden werden, die zur Verbindung ihrer Kopplungselemente bzw. zur Anbindung ihres Kopplungselements eine Verzahnung und/oder Klauen aufweist, die zur Herstellung einer drehfesten Verbindung formschlüssig ineinandergreifen, wobei eine Übertragung eines Leistungsflusses in einem vollständig geschlossenen Zustand zumindest hauptsächlich durch einen Formschluss erfolgt. Die Schalteinheiten können grundsätzlich reibschlüssig oder formschlüssig ausgebildet sein. Unter einer "reibschlüssig ausgebildeten Schalteinheit" soll dabei insbesondere eine Schalteinheit verstanden werden, die zur Verbindung ihrer Kopplungselemente bzw. zur Anbindung ihres Kopplungselements zumindest zwei Reibpartner aufweist, die zur Herstellung einer drehfesten Verbindung reibschlüssig aneinander anliegen, wobei eine Übertragung eines Leistungsflusses in einem vollständig geschlossenen Zustand zumindest hauptsächlich durch Reibung erfolgt. Eine reibschlüssig ausgebildete Kupplungseinheit ist vorzugsweise als eine Lamellenkupplungseinheit und eine reibschlüssig ausgebildete Bremseinheit ist vorzugsweise als eine Lamellenbremseinheit ausgebildet. Eine formschlüssig ausgebildete Kupplungseinheit ist vorzugsweise als eine Klauenkupplungseinheit und eine formschlüssig ausgebildete Bremseinheit ist vorzugsweise als eine Klauenbremseinheit ausgebildet. Eine formschlüssig ausgebildete Schalteinheit ist vorteilhaft über eine Schiebemuffe schaltbar. Dabei sind die formschlüssig ausgebildeten Schalteinheiten vorzugsweise ohne eine reibschlüssige Synchronisierung ausgeführt, können grundsätzlich aber auch eine reibschlüssige Synchronisierung aufweisen.

Vorzugsweise umfasst das Mehrstufengetriebe Aktuatoren zur automatisierten Schaltung der Schalteinheiten. Grundsätzlich ist es aber auch möglich, zumindest einen Teil der Schalteinheiten zumindest teilweise selbstständig schaltend auszuführen. Eine selbstständig schaltende Kupplungseinheit bzw. Bremseinheit ist vorzugsweise als ein Freilauf ausgebildet. Zudem kann auch eine Ausgestaltung der Planetenradstufen mit Einfachplanetenradsätzen oder Doppelplanetenradsätzen von den dargestellten Ausführungsbeispielen abweichen. In kinematisch äquivalenter Weise ist es beispielsweise möglich, einen Einfachplanetenradsatz durch einen Doppelplanetenradsatz zu ersetzen, wobei für eine kinematisch gleiche Wirkweise zusätzlich insbesondere eine Standübersetzung der Planetenradstufe angepasst werden muss. Insbesondere bei einer Ausbildung mittels eines Doppelplanetenradsatzes kann grundsätzlich auch eine Anbindung von einem Sonnenrad und einem Planetenradträger, einem Hohlrad und einem Planetenradträger oder einem Sonnenrad und einem Hohlrad getauscht werden, wobei für eine kinematisch gleiche Wirkweise zusätzlich insbesondere eine Standübersetzung der Planetenradstufe angepasst werden muss.

Die Begriffe "axial" und "radial" sind im Folgenden insbesondere auf die Hauptrotationsachse des Mehrstufengetriebes bezogen, so dass der Ausdruck "axial" insbesondere eine Richtung bezeichnet, die parallel oder koaxial zu der Hauptrotationsachse verläuft. Ferner bezeichnet der Ausdruck "radial" insbesondere eine Richtung, die senkrecht zu der Hauptrotationsachse verläuft. Unter einer "getriebeeingangsseitigen Anordnung" soll insbesondere verstanden werden, dass das genannte Bauteil auf einer Seite des weiteren Bauteils angeordnet ist, welche dem Getriebeeingangselement und/oder dem Elektromotor zugewandt ist. Unter einer "getriebeausgangsseitigen Anordnung" soll insbesondere verstanden werden, dass das genannte Bauteil auf einer Seite des weiteren Bauteils angeordnet ist, welche dem Getriebeeingangselement und/oder dem Elektromotor abgewandt ist, auch wenn das weitere Bauteil in axialer Richtung nach dem Getriebeausgangselement angeordnet ist, beispielsweise weil das Getriebeausgangselement zwischen zwei Planetenradstufen angeordnet ist.

Weitere Vorteile ergeben sich aus der folgenden Figurenbeschreibung. In den Figuren sind mehrere Ausführungsbeispiele der Erfindung dargestellt. Zur Unterscheidung der Ausführungsbeispiele sind die Bezugszeichen der folgenden Figurenbeschreibung durch die Buchstaben a bis c ergänzt. Bezüglich gleich bezeichneter Bauteile, insbesondere in Bezug auf Bauteile mit gleichen Bezugszeichen, soll grundsätzlich auf die Beschreibung und/oder die Zeichnungen des ersten Ausführungsbeispiels mit dem Buchstaben a verwiesen werden. Die Beschreibungen der weiteren Ausführungsbeispiele beschränken sich im Wesentlichen auf die Unterschiede zwischen den Ausführungsbeispielen. Die Figuren, die Figurenbeschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Dabei zeigen:

- Fig. 1: ein Kraftfahrzeug mit einer Antriebsvorrichtung, die einen Elektromotor und ein Mehrstufengetriebe aufweist,
- Fig. 2: ein Getriebeschema des Mehrstufengetriebes,
- Fig. 3: ein Schaltschema für das Mehrstufengetriebe aus Fig. 2,
- Fig. 4: ein Getriebeschema mit einer geänderten Anordnung einer Schalteinheit,
- Fig. 5: ein weiteres Getriebeschema mit einer geänderten Anordnung einer Schalteinheit,
- Fig. 6: ein Getriebeschema mit Planetenradstufen, die teilweise gestapelt sind, und
- Fig. 7: ein weiteres Getriebeschema mit Planetenradstufen, die teilweise gestapelt sind.

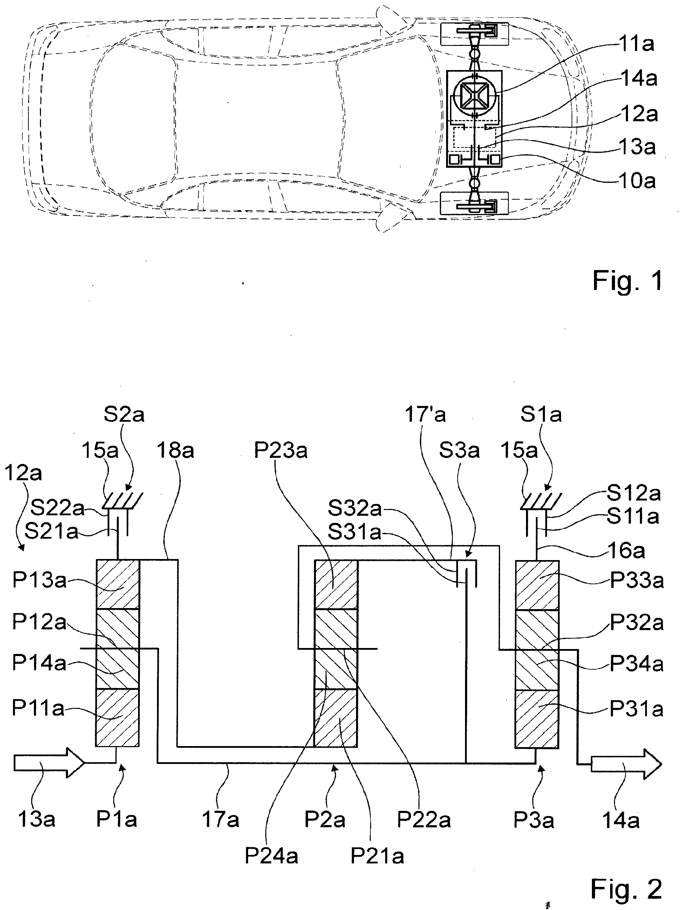

Figur 1 zeigt ein Kraftfahrzeug mit einer Antriebsvorrichtung. Die Antriebsvorrichtung ist für einen elektromotorischen Antrieb des Kraftfahrzeugs vorgesehen. Das Kraftfahrzeug kann als ein reines Elektrofahrzeug ausgebildet sein. Die Antriebsvorrichtung ist lediglich für den elektromotorischen Antrieb vorgesehen. Grundsätzlich ist es denkbar, dass die Antriebsvorrichtung mit einer zweiten Antriebsvorrichtung für einen verbrennungsmotorischen Antrieb kombiniert wird. Beispielsweise kann die vorgeschlagene Antriebsvorrichtung, die für den elektromotorischen Antrieb vorgesehen ist, auf eine erste Antriebsachse des Kraftfahrzeugs wirken, während die Antriebsvorrichtung, die für den verbrennungsmotorischen Antrieb vorgesehen ist, auf eine zweite Antriebsachse des Kraftfahrzeugs wirkt. Wird die vorgeschlagene Antriebsvorrichtung mit einer verbrennungsmotorischen Antriebsvorrichtung kombiniert, ist es auch denkbar, dass das Kraftfahrzeug ein zusätzliches Summier- und/oder Auswahlgetriebe aufweist, das den beiden Antriebsvorrichtungen nachgeschaltet ist und das dazu vorgesehen ist, beide Antriebsvorrichtungen an eine einzige Antriebsachse anzubinden.

Die Antriebsvorrichtung umfasst einen Elektromotor 10a, einen Achsantrieb 11a und ein zwischen dem Elektromotor 10a und dem Achsantrieb 11a angeordnetes Mehrstufengetriebe 12a (vgl. Figur 2). Der Elektromotor 10a kann eine permanenterregte Synchronmaschine oder eine permanenterregte Asynchronmaschine sein. Das Mehrstufengetriebe 12a ist konstruktiv zur Schaltung von drei unterschiedlich übersetzten Vorwärtsgetriebegängen V1a, V2a, V3a vorgesehen. Das Mehrstufengetriebe 12a weist genau drei Planetenradstufen P1a, P2a, P3a auf. Das Mehrstufengetriebe 12a weist eine Hauptrotationsachse auf, zu der die erste Planetenradstufe P1a, die zweite Planetenradstufe P2a und die dritte Planetenradstufe P3a koaxial angeordnet sind. Das Mehrstufengetriebe 12a ist konstruktiv dazu vorgesehen, genau drei unterschiedlich übersetzte Vorwärtsgetriebegänge V1a, V2a, V3a zu schalten. Eine Anzahl der tatsächlich verwendeten Vorwärtsgetriebegänge V1a, V2a, V3a kann in Abhängigkeit von einer Betriebsstrategie eingeschränkt sein, beispielsweise elektronisch durch eine entsprechend programmierte Steuer- und Regeleinheit.

Das Mehrstufengetriebe 12a weist genau drei Schalteinheiten S1a, S2a, S3a auf, die zur Schaltung der Vorwärtsgetriebegänge V1a, V2a, V3a vorgesehen sind. Vorteilhafterweise kann das Mehrstufengetriebe 12a auch dahingehend abgewandelt werden, dass anstelle der dritten Schalteinheit S3a eine nicht schaltbare drehfeste Verbindung vorgesehen ist. Es resultiert dann ein nicht in der Zeichnung näher dargestelltes abgewandeltes Mehrstufengetriebe, welches zwei Vorwärtsgetriebegänge V1a und V3a ermöglicht. Der im Mehrstufengetriebe 12a mögliche zweite Gang V2a ist im abgewandelten Mehrstufengetriebe nicht möglich, da an der Stelle der dritten Schalteinheit S3a eine permanent drehfeste Verbindung besteht. Das abgewandelte Mehrstufengetriebe bietet zwei günstig übersetzte Vorwärtsgetriebegänge bei sehr geringem baulichem Aufwand. Das abgewandelte Mehrstufengetriebe kann aus allen nachfolgend gezeigten Varianten des Mehrstufengetriebes 12a-e jeweils unter Ersatz der dritten Schalteinheit S3a-e durch eine permanente drehfeste Verbindung gebildet werden.

Das Mehrstufengetriebe 12a weist ein Getriebegehäuse 15a auf, das die Planetenradstufen P1a, P2a, P3a und die Schalteinheiten S1a, S2a, S3a aufnimmt. Die Schalteinheiten S1a, S2a, S3a sind wirkungsmäßig innerhalb eines durch die Planetenradstufen P1a, P2a, P3a ausgebildeten Zahnradsatzes angeordnet, d.h. die Schalteinheiten S1a, S2a, S3a sind dazu vorgesehen, unterschiedliche Wirkverbindungen zwischen den Planetenradstufen P1a, P2a, P3a untereinander und/oder zwischen den Planetenradstufen P1a, P2a, P3a und dem Getriebegehäuse 15a herzustellen.

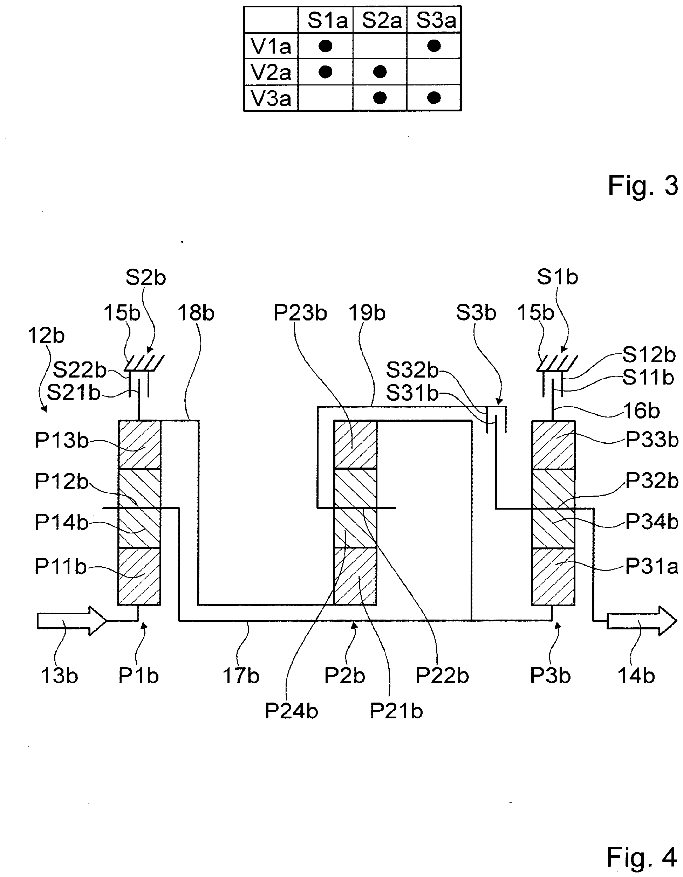

Das in Figur 3 dargestellte Schaltschema zeigt, wie durch Schließen der Schalteinheiten S1a, S2a, S3a die Vorwärtsgetriebegänge V1a, V2a, V3a geschaltet werden. Die Vorwärtsgetriebegänge V1a, V2a, V3a werden jeweils durch Schließen von zwei der insgesamt drei Schalteinheiten S1a, S2a, S3a geschaltet. Jede der Schalteinheiten S1a, S2a, S3a ist genau einem der Vorwärtsgetriebegänge V1a, V2a, V3a zugeordnet. Eine Lastschaltung zwischen zwei der Vorwärtsgetriebegänge V1a, V2a, V3a ist dabei insbesondere immer dann möglich, wenn in einem Schaltvorgang höchstens eine der Schalteinheiten S1a, S2a, S3a geschlossen wird und/oder höchstens eine der Schalteinheiten S1a, S2a, S3a geöffnet wird, d.h. wenn ein Leistungsfluss von einer der Schalteinheiten S1a, S2a, S3a an eine andere der Schalteinheiten S1a, S2a, S3a übergeben wird oder wenn ein Schaltzustand von lediglich einer der Schalteinheiten S1a, S2a, S3a verändert wird. Die drei Vorwärtsgetriebegänge V1a, V2a, V3a sind untereinander grundsätzlich vollständig lastschaltbar.

Bei dem abgewandelten Mehrstufengetriebe, für welches kein Schaltschema gezeigt ist, entfällt der Vorwärtsgetriebegang V2a, da bei diesem Mehrstufengetriebe anstelle des dritten Schaltelementes S3a eine permanente drehfeste Verbindung vorgesehen ist.

Das Mehrstufengetriebe 12a verbindet den Elektromotor 10a mit dem Achsantrieb 11a des Kraftfahrzeugs. Mittels des Mehrstufengetriebes 12a kann ein Übersetzungsverhältnis zwischen dem Elektromotor 10a und dem Achsantrieb 11a verändert werden. Das Mehrstufengetriebe 12a weist ein Getriebeeingangselement 13a auf, das dazu vorgesehen ist, das von dem Elektromotor 10a abgegebene Antriebsmoment in das Mehrstufengetriebe 12a einzuleiten. Der Elektromotor 10a umfasst einen Rotor, der in dem dargestellten Ausführungsbeispiel permanent drehfest mit dem Getriebeeingangselement 13a verbunden ist. Das Getriebeeingangselement 13a kann unterschiedlich ausgebildet sein, wie beispielsweise als eine Welle oder als ein Flansch.

Weiter weist das Mehrstufengetriebe 12a ein Getriebeausgangselement 14a auf, das dazu vorgesehen ist, ein Antriebsmoment aus dem Mehrstufengetriebe 12a auszuleiten. Der Achsantrieb 11a weist in dem dargestellten Ausführungsbeispiel ein Differentialgetriebe auf, dessen Eingang permanent drehfest mit dem Getriebeausgangselement 14a verbunden ist. Der Achsantrieb 11a ist dazu vorgesehen, das von dem Elektromotor 10a bereitgestellte Antriebsmoment auf die zwei Antriebsräder der Antriebsachse zu verteilen. Alternativ ist es auch denkbar, dass das Getriebeausgangselement 14a permanent drehfest mit einer Achswelle und/oder einem der Antriebsräder verbunden ist. Beispielsweise kann das Kraftfahrzeug zwei der Antriebsvorrichtungen aufweisen, die jeweils direkt auf ein Antriebsrad des Kraftfahrzeugs wirken. Zusätzlich kann zwischen dem Getriebeausgangselement 14a und dem Achsantrieb 11a zumindest ein weiteres Modul angeordnet sein, wie beispielsweise ein Allradantriebsmodul, das das Antriebsmoment auf zwei verschiedene Antriebsachsen verteilt. Das Getriebeausgangselement 14a kann unterschiedlich ausgebildet sein, wie beispielsweise als eine Welle, als ein Stirnrad oder als ein Ritzel.

Das Getriebeeingangselement 13a und das Getriebeausgangselement 14a sind koaxial zu der Hauptrotationsachse angeordnet. Das Getriebeeingangselement 13a ist auf einer dem Elektromotor 10a zugewandten Seite des Mehrstufengetriebes 12a angeordnet. Für das Getriebeausgangselement 14a sind in axialer Richtung grundsätzlich unterschiedliche Anordnungen denkbar. In dem dargestellten Mehrstufengetriebe 12a sind die Planetenradstufen P1a, P2a, P3a zwischen dem Getriebeeingangselement 13a und dem Getriebeausgangselement 14a angeordnet. Grundsätzlich ist eine Umordnung der Planetenradstufen P1a, P2a, P3a möglich, bei der das Getriebeausgangselement 14a zwischen zwei der Planetenradstufen P1a, P2a, P3a angeordnet ist. Die Planetenradstufen P1a, P2a, P3a sind in axialer Richtung hintereinander angeordnet. Zur Umgestaltung des Mehrstufengetriebes 12a ist es möglich, eine Reihenfolge der Planetenradstufen P1a, P2a, P3a entlang der Hauptrotationsachse zu ändern. Das Mehrstufengetriebe 12a weist drei Ebenen auf, in denen die Planetenradstufen P1a, P2a, P3a angeordnet sind. Eine Nummerierung der Ebene entspricht einer Reihenfolge der Ebenen, die im Folgenden auf das Getriebeeingangselement 13a bezogen ist. Die erste Ebene weist einen kleineren Abstand zu dem Elektromotor 10a auf als die dritte Ebene. Die erste Planetenradstufe P1a ist entlang der Hauptrotationsachse in der ersten Ebene angeordnet. Die erste Planetenradstufe P1a weist einen Einfachplanetenradsatz auf und umfasst ein Sonnenrad P11a, ein Hohlrad P13a und einen Planetenradträger P12a. Der Planetenradträger P12a führt Planetenräder P14a auf einer Kreisbahn. Die Planetenräder P14a kämmen mit dem Sonnenrad P11a und mit dem Hohlrad P13a. Die Planetenräder P14a sind drehbar auf dem Planetenradträger P12a gelagert.

Die zweite Planetenradstufe P2a ist entlang der Hauptrotationsachse in der zweiten Ebene angeordnet. Die zweite Planetenradstufe P2a ist entlang der Hauptrotationsachse auf einer dem Getriebeeingangselement 13a abgewandten Seite der ersten Planetenradstufe P1a angeordnet. Die zweite Planetenradstufe P2a weist einen Einfachplanetenradsatz auf und umfasst ein Sonnenrad P21a, ein Hohlrad P23a und einen Planetenradträger P22a. Der Planetenradträger P22a führt Planetenräder P24a auf einer Kreisbahn. Die Planetenräder P24a kämmen mit dem Sonnenrad P21a und mit dem Hohlrad P23a. Die Planetenräder P24a sind drehbar auf dem Planetenradträger P22a gelagert.

Die dritte Planetenradstufe P3a ist entlang der Hauptrotationsachse in der dritten Ebene angeordnet. Die dritte Planetenradstufe P3a ist entlang der Hauptrotationsachse auf einer dem Getriebeeingangselement 13a abgewandten Seite der zweiten Planetenradstufe P2a angeordnet. Die dritte Planetenradstufe P3a weist einen Einfachplanetenradsatz auf und umfasst ein Sonnenrad P31a, ein Hohlrad P33a und einen Planetenradträger P32a. Der Planetenradträger P32a führt Planetenräder P34a auf einer Kreisbahn. Die Planetenräder P34a kämmen mit dem Sonnenrad P31a und mit dem Hohlrad P33a. Die Planetenräder P34a sind drehbar auf dem Planetenradträger P32a gelagert.

Zwei der Schalteinheiten S1a, S2a, S3a sind als Bremsen ausgebildet. Die als Bremsen ausgebildeten Schalteinheiten S1a, S2a weisen jeweils ein drehbar gelagertes Kopplungselement S11a, S21a und ein gehäusefest angeordnetes Kopplungselement S12a, S22a auf. Die Schalteinheiten S1a, S2a sind jeweils dazu vorgesehen, ihr drehbar gelagertes Kopplungselement S11a, S21a drehfest mit dem Getriebegehäuse 15a zu verbinden. Jedes der drehbar gelagerten Kopplungselemente S11a, S21a der Schalteinheiten S1a, S2a ist mit zumindest einem der Sonnenräder P11a, P21a, P31a, einem der Planetenradträger P12a, P22a, P32a und/oder einem der Hohlräder P13a, P23a, P33a permanent drehfest verbunden. Die gehäusefest angeordneten Kopplungselemente S12a, S22a der Schalteinheiten S1a, S2a sind permanent drehfest mit dem Getriebegehäuse 15a verbunden.

Die verbleibende Schalteinheit S3a ist als Kupplung ausgebildet. Die als Kupplung ausgebildete Schalteinheit S3a weist ein erstes drehbar gelagertes Kopplungselement S31a und ein zweites drehbar gelagertes Kopplungselement S32a auf. Die Schalteinheit S3a ist dazu vorgesehen, ihre beiden Kopplungselemente S31a, S32a drehfest miteinander zu verbinden. Jedes der Kopplungselemente S31a, S32a der Schalteinheit S3a ist mit zumindest einem der Sonnenräder P11a, P21a, P31a, einem der Planetenradträger P12a, P22a, P32a und/oder einem der Hohlräder P13a, P23a, P33a permanent drehfest verbunden.

Zur Verbindung der Planetenradstufen P1a, P2a, P3a untereinander und mit den Kopplungselementen S11a, S12a, S21a, S22a, S31a, S32a umfasst das Mehrstufengetriebe 12a eine Mehrzahl von Getriebeelementen 16a, 17a, 17'a, 18a. Die vier Getriebeelemente 16a, 17a, 17'a, 18a sind dazu vorgesehen, Drehmomente und/oder Drehbewegungen innerhalb des durch die Planetenradstufen P1a, P2a, P3a ausgebildeten Zahnradsatzes abzustützen und/oder zu übertragen. Jedes der Getriebeelemente 16a, 17a, 17'a, 18a verbindet zumindest zwei der Sonnenräder P11a, P21a, P31a, Planetenradträger P12a, P22a, P32a, Hohlräder P13a, P23a, P33a und/oder Kopplungselemente S11a, S12a, S21a, S22a, S31a, S32a permanent drehfest miteinander oder stützt zumindest eines der Sonnenräder P11a, P21a, P31a, Planetenradträger P12a, P22a, P32a und/oder Hohlräder P13a, P23a, P33a permanent gegen das Getriebegehäuse 15a ab.

Das Getriebeeingangselement 13a bildet eine Getriebeeingangswelle aus, die das Getriebeeingangselement 13a und das Sonnenrad P11a der ersten Planetenradstufe P1a permanent drehfest miteinander verbindet. Das Getriebeeingangselement 13a ist eingangsseitig an das Sonnenrad P11a angebunden.

Das Getriebeausgangselement 14a bildet eine Getriebeausgangswelle aus, die das Getriebeausgangselement 14a, den Planetenradträger P32a der dritten Planetenradstufe P3a und den Planetenradträger P22a der zweiten Planetenradstufe P2a permanent drehfest miteinander verbindet. Die durch das Getriebeausgangselement 14a ausgebildete Getriebeausgangswelle ist als der Planetenradträger P32a durch die dritte Planetenradstufe P3a hindurchgeführt, umschließt die zweiten Planetenradstufe P2a und ist zur Anbindung des Planetenradträger P22a zwischen der ersten Planetenradstufe P1a und der zweiten Planetenradstufe P2a radial nach innen geführt.

Das Getriebeelement 16a bildet eine Anbindung aus, die das Hohlrad P33a der dritten Planetenradstufe P3a und das erste Kopplungselement S11a der ersten Schalteinheit S1a permanent drehfest miteinander verbindet.

Das Getriebeelement 17a bildet eine Zwischenwelle aus, die den Planetenradträger P12a der ersten Planetenradstufe P1a, das Sonnenrad P31a der dritten Planetenradstufe P3a und das erste Kopplungselement S31a der dritten Schalteinheit S3a permanent drehfest miteinander verbindet. Die durch das Getriebeelement 17a ausgebildete Zwischenwelle durchsetzt die zweite Planetenradstufe P2a. Zur Anbindung des Kopplungselements S31a ist die durch das Getriebeelement 17a ausgebildete Zwischenwelle zwischen der zweiten Planetenradstufe P2a und der dritten Planetenradstufe P3a radial nach außen geführt.

Das Getriebeelement 17'a bildet eine Anbindung aus, die das Hohlrad P23a der zweiten Planetenradstufe P2a und das zweite Kopplungselement S32a der dritten Schalteinheit S3a permanent drehfest miteinander verbindet.

Das Getriebeelement 18a bildet eine Getriebewelle aus, die das Hohlrad P13a der ersten Planetenradstufe P1a, das erste Kopplungselement S21a der zweiten Schalteinheit S2a und das Sonnenrad P21a der zweiten Planetenradstufe P2a permanent drehfest miteinander verbindet. Die durch das Getriebeelement 18a ausgebildete Getriebewelle ist zwischen der ersten Planetenradstufe P1a und der zweiten Planetenradstufe P2a radial nach innen geführt.

Die erste Schalteinheit S1a ist in axialer Richtung in Höhe der dritten Planetenradstufe P3a angeordnet. Die zweite Schalteinheit S2a ist axial in Höhe der ersten Planetenradstufe P1a angeordnet. Die dritte Schalteinheit S3a ist axial zwischen der zweiten Planetenradstufe P2a und der dritten Planetenradstufe P3a angeordnet. Grundsätzlich ist auch eine andere räumliche Anordnung der Schalteinheiten S1a, S2a, S3a möglich.

Die erste Schalteinheit S1a ist dazu vorgesehen, das Hohlrad P33a der dritten Planetenradstufe P3a gehäusefest anzuordnen. Die zweite Schalteinheit S2a ist dazu vorgesehen, das Hohlrad P13a der ersten Planetenradstufe P1a und das Sonnenrad P21a der zweiten Planetenradstufe P2a gehäusefest anzuordnen. Die dritte Schalteinheit S3a ist dazu vorgesehen, das Hohlrad P23a der zweiten Planetenradstufe P2a drehfest mit dem Sonnenrad P31a der dritten Planetenradstufe P3a und dem Hohlrad P13a der ersten Planetenradstufe P1a zu verbinden. Ist die Schalteinheit S3a geöffnet, sind das Getriebeelement 17'a und das mit dem Getriebeelement 17'a permanent drehfest verbundene Hohlrad P23a der zweiten Planetenradstufe P2a relativ zu den restlichen Getriebeelementen 16a, 17a, 18a frei drehbar. Durch das frei drehbare Hohlrad P23a ist die zweite Planetenradstufe P2a von der ersten Planetenradstufe P1a und der dritten Planetenradstufe P3a entkoppelt, wenn die dritte Schalteinheit S3a geöffnet ist. Die dritte Schalteinheit S1a ist dazu vorgesehen, die zweite Planetenradstufe P2a von der ersten Planetenradstufe P1a und der dritten Planetenradstufe P3a zu entkoppeln.

Die Schalteinheiten S1a, S2a sind außenliegend ausgeführt, d.h. eine Betätigungsmittelversorgung der Schalteinheiten S1a, S2a ist ohne Durchführung von Betriebsmittelleitungen durch ein drehbar gelagertes Bauteil realisierbar. Die Schalteinheiten S3a ist innenliegend ausgeführt, d.h. erfordert eine Betriebsmitteldurchführung durch ein drehbar gelagertes Bauteil. Sämtliche Schalteinheiten S1a, S2a, S3a sind hydraulisch betätigt.

In der beschriebenen Ausgestaltung weist der Achsantrieb 11a das Differentialgetriebe auf, dessen Abtriebe koaxial zu der Hauptrotationsachse des Mehrstufengetriebes 12a angeordnet sind (vgl. Figur 1). In der beschriebenen Ausgestaltung umfasst der Achsantrieb 11a zudem zwei Achswellen zum Antrieb der Antriebsräder einer Antriebsachse. In einer vorteilhaften Ausgestaltung weist der Achsantrieb 11a eine Hauptrotationsachse auf, die koaxial zu der Hauptrotationsachse des Mehrstufengetriebes 12a angeordnet ist. Vorzugsweise durchsetzt eine der Achswellen zumindest das Getriebeeingangselement 13a und den Elektromotor 10a. Insbesondere ist es möglich, den Achsantrieb 11a zumindest teilweise in das Mehrstufengetriebe 12a zu integrieren. Eine Schachtelung des Mehrstufengetriebes 12a und des Achsantriebs 11a hängt insbesondere von einer Position des Differentialgetriebes entlang der Hauptrotationsachse des Mehrstufengetriebes 12a ab. Ist das Differentialgetriebe zwischen dem Getriebeeingangselement 13a und dem Getriebeausgangselement 14a angeordnet, durchsetzt eine der Achswellen das Getriebeeingangselement 13a und den Elektromotor 10a, während die andere Achswelle das Getriebeausgangselement 14a durchsetzt. Ist das Differentialgetriebe des Achsantriebs 11a getriebeausgangsseitig angeordnet, durchsetzt vorzugsweise eine der Achswellen das Getriebeausgangselement 14a, das Getriebeeingangselement 13a und den Elektromotor 10a. Auch in einer Ausgestaltung, in der der Achsantrieb 11a für eine direkte Anbindung von lediglich einem Antriebsrad vorgesehen ist, ist es denkbar, das Getriebeausgangselement 14a in Form einer Innenwelle durch das Getriebeeingangselement 13a und den Elektromotor 10a hindurchzuführen, wodurch der Elektromotor 10a zwischen dem Antriebsrad und dem Mehrstufengetriebe 12a angeordnet ist.

Figur 4 zeigt als zweites Ausführungsbeispiel ein Getriebeschema eines Mehrstufengetriebes 12b für eine Antriebsvorrichtung mit einem Elektromotor und einem Achsantrieb. Das Mehrstufengetriebe 12b ist zumindest konstruktiv zur Schaltung von drei Vorwärtsgetriebegängen vorgesehen. Das Getriebeschema ist kinematisch äquivalent zu dem des ersten Ausführungsbeispiels.

Das Mehrstufengetriebe 12b umfasst ein Getriebeeingangselement 13b zur drehfesten Anbindung des Elektromotors und ein Getriebeausgangselement 14b zur drehfesten Anbindung des Achsantriebs. Zudem umfasst das Mehrstufengetriebe 12b einen Zahnradsatz mit einer ersten Planetenradstufe P1b, einer zweiten Planetenradstufe P2b und einer dritten Planetenradstufe P3b, die jeweils ein Sonnenrad P11b, P21b, P31b, ein Hohlrad P13b, P23b, P33b und einen Planetenradträger P12b, P22b, P32b, welcher Planetenräder P14b, P24b, P34b in einer Kreisbahn um das entsprechende Sonnenrad P11b, P21b, P31b führt, aufweisen. Weiter umfasst das Mehrstufengetriebe 12b drei Schalteinheiten S1b, S2b, S3b, die jeweils zwei Kopplungselemente S11b, S12b, S21b, S22b, S31b, S32b aufweisen. Zur Übertragung von Leistungsflüssen zwischen den Planetenradstufen P1b, P2b, P3b und/oder zur Abstützung gegen ein Getriebegehäuse 15b umfasst das Mehrstufengetriebe 12b eine Mehrzahl von Getriebeelementen 16b, 17b, 18b, 19b.

Das Mehrstufengetriebe 12b unterscheidet sich insbesondere in einer Anordnung der Schalteinheit S3b von dem des ersten Ausführungsbeispiels. Die Schalteinheit S3b ist dazu vorgesehen, den Planetenradträger P22b der zweiten Planetenradstufe P2b drehfest mit dem Planetenradträger P32b der dritten Planetenradstufe P3b und dem Getriebeausgangselement 14b zu verbinden.

Das Getriebeelement 19b bildet eine Getriebewelle aus, die den Planetenradträger P22b der zweiten Planetenradstufe P2b und das zweite Kopplungselement S32b der dritten Schalteinheit S3b permanent drehfest miteinander verbindet. Das Getriebeausgangselement 14b bildet eine Getriebeausgangswelle aus, die das Getriebeausgangselement 14b, den Planetenradträger P32b der dritten Planetenradstufe P3b und das erste Kopplungselement S31b der dritten Schalteinheit S3b permanent drehfest miteinander verbindet. Das Getriebeelement 17b bildet eine Getriebewelle aus, die den Planetenradträger P12b der ersten Planetenradstufe P1b, das Sonnenrad P31b der dritten Planetenradstufe P3b und das Hohlrad P23b der zweiten Planetenradstufe P2b permanent drehfest miteinander verbindet.

Die dritte Schalteinheit S1b ist dazu vorgesehen, die zweite Planetenradstufe P2b von der ersten Planetenradstufe P1b und der dritten Planetenradstufe P3b zu entkoppeln. Ist die Schalteinheit S3b geöffnet, sind das Getriebeelement 19b und der mit dem Getriebeelement 19b permanent drehfest verbundene Planetenradträger P22b der zweiten Planetenradstufe P2b relativ zu den restlichen Getriebeelementen 16b, 17b, 18b frei drehbar. Durch den frei drehbaren Planetenradträger P22b ist die zweite Planetenradstufe P2b von der ersten Planetenradstufe P1b und der dritten Planetenradstufe P3b entkoppelt, wenn die Schalteinheit S3b geöffnet ist.

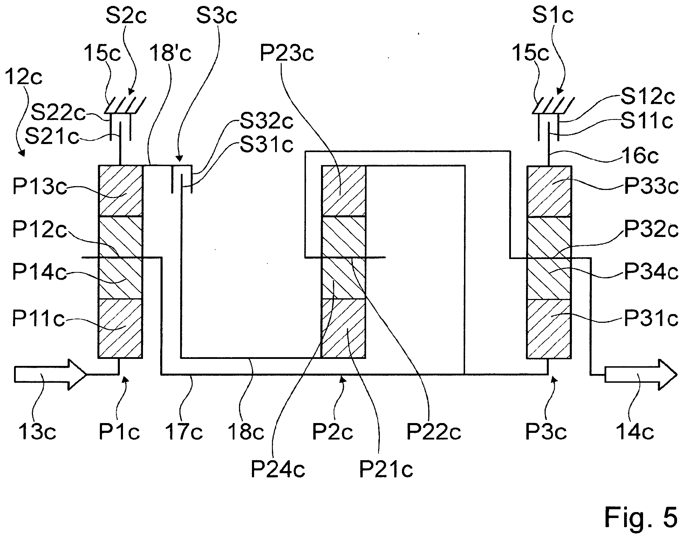

Figur 5 zeigt als drittes Ausführungsbeispiel ein Getriebeschema eines Mehrstufengetriebes 12c für eine Antriebsvorrichtung mit einem Elektromotor und einem Achsantrieb. Das Mehrstufengetriebe 12c ist zumindest konstruktiv zur Schaltung von drei Vorwärtsgetriebegängen vorgesehen. Das Getriebeschema ist kinematisch äquivalent zu dem des ersten Ausführungsbeispiels.

Das Mehrstufengetriebe 12c umfasst ein Getriebeeingangselement 13c zur drehfesten Anbindung des Elektromotors und ein Getriebeausgangselement 14c zur drehfesten Anbindung des Achsantriebs. Zudem umfasst das Mehrstufengetriebe 12c einen Zahnradsatz mit einer ersten Planetenradstufe P1c, einer zweiten Planetenradstufe P2c und einer dritten Planetenradstufe P3c, die jeweils ein Sonnenrad P11c, P21c, P31c, ein Hohlrad P13c, P23c, P33c und einen Planetenradträger P12c, P22c, P32c, welcher Planetenräder P14c, P24c, P34c in einer Kreisbahn um das entsprechende Sonnenrad P11c, P21c, P31c führt, aufweisen. Weiter umfasst das Mehrstufengetriebe 12c drei Schalteinheiten S1c, S2c, S3c, die jeweils zwei Kopplungselemente S11c, S12c, S21c, S22c, S31c, S32c aufweisen. Zur Übertragung von Leistungsflüssen zwischen den Planetenradstufen P1c, P2c, P3c und/oder zur Abstützung gegen ein Getriebegehäuse 15c umfasst das Mehrstufengetriebe 12c eine Mehrzahl von Getriebeelementen 16c, 17c, 18c, 18'c.

Das Mehrstufengetriebe 12c unterscheidet sich ebenfalls insbesondere in einer Anordnung der Schalteinheit S3c von dem des ersten Ausführungsbeispiels. Die Schalteinheit S3c ist dazu vorgesehen, das Sonnenrad P21c der zweiten Planetenradstufe P2c drehfest mit dem Hohlrad P13c der ersten Planetenradstufe P1c zu verbinden.

Das Getriebeelement 18c bildet eine Getriebewelle aus, die das Sonnenrad P21c der zweiten Planetenradstufe P2c und das erste Kopplungselement S31c der dritten Schalteinheit S3c permanent drehfest miteinander verbindet. Das Getriebeelement 18'c bildet eine Anbindung aus, die das Hohlrad P13c der ersten Planetenradstufe P1c, das erste Kopplungselement S21c der zweiten Schalteinheit S2c und das zweite Kopplungselement S32c der dritten Schalteinheit S3c permanent drehfest miteinander verbindet. Das Getriebeelement 17c bildet eine Getriebewelle aus, die den Planetenradträger P12c der ersten Planetenradstufe P1c, das Sonnenrad P31c der dritten Planetenradstufe P3c und das Hohlrad P23c der zweiten Planetenradstufe P2c permanent drehfest miteinander verbindet.

Die dritte Schalteinheit S1c ist dazu vorgesehen, die zweite Planetenradstufe P2c von der ersten Planetenradstufe P1c und der dritten Planetenradstufe P3c zu entkoppeln. Ist die Schalteinheit S3c geöffnet, sind das Getriebeelement 18c und das mit dem Getriebeelement 18c permanent drehfest verbundene Sonnenrad P21c der zweiten Planetenradstufe P2c relativ zu den restlichen Getriebeelementen 16c, 17c, 18c frei drehbar. Durch das frei drehbare Sonnenrad P21c ist die zweite Planetenradstufe P2c von der ersten Planetenradstufe P1c und der dritten Planetenradstufe P3c entkoppelt, wenn die Schalteinheit S3c geöffnet ist.

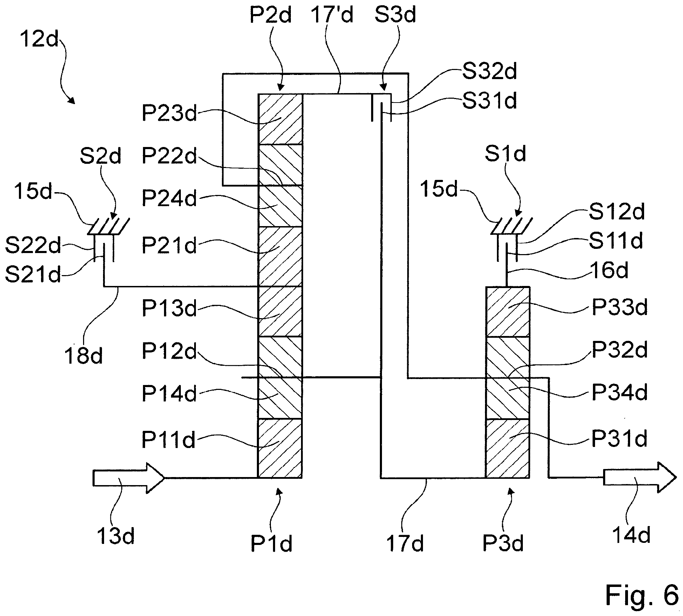

Figur 6 zeigt als viertes Ausführungsbeispiel ein Getriebeschema eines Mehrstufengetriebes 12d für eine Antriebsvorrichtung mit einem Elektromotor und einem Achsantrieb. Das Mehrstufengetriebe 12d ist zumindest konstruktiv zur Schaltung von drei Vorwärtsgetriebegängen vorgesehen. Das Getriebeschema gleicht strukturell dem des ersten Ausführungsbeispiels.

Das Mehrstufengetriebe 12d umfasst ein Getriebeeingangselement 13d zur drehfesten Anbindung des Elektromotors und ein Getriebeausgangselement 14d zur drehfesten Anbindung des Achsantriebs. Zudem umfasst das Mehrstufengetriebe 12d einen Zahnradsatz mit einer ersten Planetenradstufe P1d, einer zweiten Planetenradstufe P2d und einer dritten Planetenradstufe P3d, die jeweils ein Sonnenrad P11d, P21d, P31d, ein Hohlrad P13d, P23d, P33d und einen Planetenradträger P12d, P22d, P32d, welcher Planetenräder P14d, P24d, P34d in einer Kreisbahn um das entsprechende Sonnenrad P11d, P21d, P31d führt, aufweisen. Weiter umfasst das Mehrstufengetriebe 12d drei Schalteinheiten S1d, S2d, S3d, die jeweils zwei Kopplungselemente S11d, S12d, S21d, S22d, S31d, S32d aufweisen. Zur Übertragung von Leistungsflüssen zwischen den Planetenradstufen P1d, P2d, P3d und/oder zur Abstützung gegen ein Getriebegehäuse 15d umfasst das Mehrstufengetriebe 12d eine Mehrzahl von Getriebeelementen 16d, 17d, 17'd, 18d.

Das Mehrstufengetriebe 12d unterscheidet sich insbesondere in einer Anordnung der Planetenradstufen P1d, P2d, P3d von dem des ersten Ausführungsbeispiels. Im Unterschied zu dem ersten Ausführungsbeispiel sind die erste Planetenradstufe P1d und die zweite Planetenradstufe P2d gestapelt angeordnet. Das Mehrstufengetriebe 12d weist zwei Ebenen auf, in denen die drei Planetenradstufen P1d, P2d, P3d angeordnet sind. Die erste Planetenradstufe P1d und die zweite Planetenradstufe P2d sind in der ersten Ebene angeordnet. Die erste Planetenradstufe P1d ist radial innerhalb der zweiten Planetenradstufe P2d angeordnet. Die erste Schalteinheit S1d ist axial in Höhe der Planetenradstufen P1d, P2d angeordnet. Die zweite Schalteinheit S2d ist axial in Höhe der dritte Planetenradstufe P3d angeordnet. Die dritte Schalteinheit S3d ist zwischen den Planetenradstufen P1d, P2d und der Planetenradstufe P3d angeordnet. Die dritte Planetenradstufe P3d ist in der zweiten Ebene angeordnet.

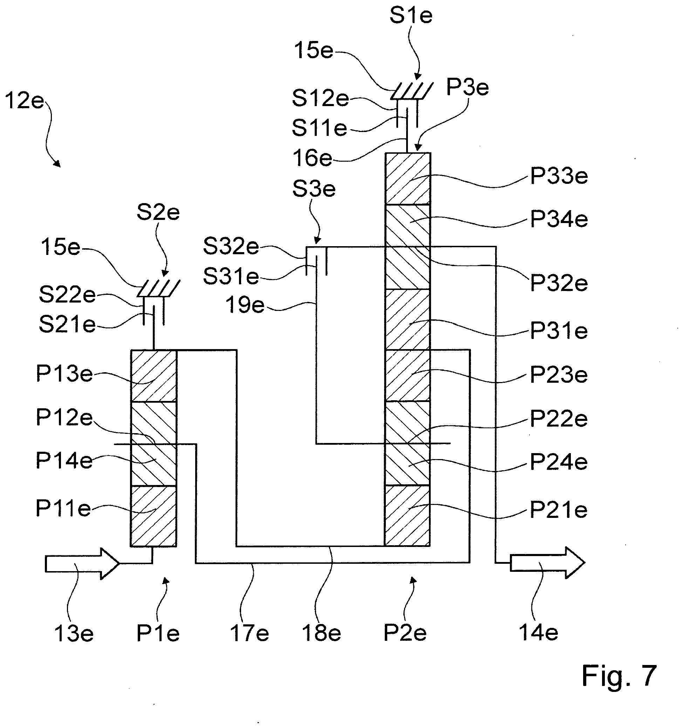

Figur 7 zeigt als fünftes Ausführungsbeispiel ein Getriebeschema eines Mehrstufengetriebes 12e für eine Antriebsvorrichtung mit einem Elektromotor und einem Achsantrieb. Das Mehrstufengetriebe 12e ist zumindest konstruktiv zur Schaltung von drei Vorwärtsgetriebegängen vorgesehen. Das Getriebeschema gleicht strukturell dem des zweiten Ausführungsbeispiels.

Das Mehrstufengetriebe 12e umfasst ein Getriebeeingangselement 13e zur drehfesten Anbindung des Elektromotors und ein Getriebeausgangselement 14e zur drehfesten Anbindung des Achsantriebs. Zudem umfasst das Mehrstufengetriebe 12e einen Zahnradsatz mit einer ersten Planetenradstufe P1e, einer zweiten Planetenradstufe P2e und einer dritten Planetenradstufe P3e, die jeweils ein Sonnenrad P11e, P21e, P31e, ein Hohlrad P13e, P23e, P33e und einen Planetenradträger P12e, P22e, P32e, welcher Planetenräder P14e, P24e, P34e in einer Kreisbahn um das entsprechende Sonnenrad P11e, P21e, P31e führt, aufweisen. Weiter umfasst das Mehrstufengetriebe 12e drei Schalteinheiten S1e, S2e, S3e, die jeweils zwei Kopplungselemente S11e, S12e, S21e, S22e, S31e, S32e aufweisen. Zur Übertragung von Leistungsflüssen zwischen den Planetenradstufen P1e, P2e, P3e und/oder zur Abstützung gegen ein Getriebegehäuse 15e umfasst das Mehrstufengetriebe 12e eine Mehrzahl von Getriebeelementen 16e, 17e, 18e, 19e.

Das Mehrstufengetriebe 12e unterscheidet sich insbesondere in einer Anordnung der Planetenradstufen P1e, P2e, P3e von dem des zweiten Ausführungsbeispiels. Im Unterschied zu dem zweiten Ausführungsbeispiel sind die zweite Planetenradstufe P2e und die dritte Planetenradstufe P3e gestapelt angeordnet. Das Mehrstufengetriebe 12e weist zwei Ebenen auf, in denen die drei Planetenradstufen P1e, P2e, P3e angeordnet sind. Die erste Planetenradstufe P1e ist in der ersten Ebene angeordnet. Die zweite Planetenradstufe P2e und die dritte Planetenradstufe P3e sind in der zweiten Ebene angeordnet. Die zweite Planetenradstufe P2e ist radial innerhalb der dritten Planetenradstufe P3e angeordnet. Die zweite Schalteinheit S2e ist axial in Höhe der ersten Planetenradstufe P1e angeordnet. Die zweite Schalteinheit S2e ist axial in Höhe der Planetenradstufen P2e, P3e angeordnet. Die dritte Schalteinheit S3e ist zwischen der Planetenradstufe P1e und den Planetenradstufen P2e, P3e angeordnet.

Aus dem Mehrstufengetriebe 12e lässt sich besonders vorteilhaft eine bauraumoptimierte Variante des nicht näher dargestellten abgewandelten Mehrstufengetriebes darstellen, indem das dritte Schalteinheit S3e des Mehrstufengetriebes 12e durch eine permanente drehfeste Verbindung zwischen dem Planetenradträger P32e der dritten Planetenradstufe P3e und dem Planetenradträger P22e der zweiten Planetenradstufe P2e ersetzt wird. Wie oben bereits prinzipiell beschrieben, lässt sich so ein vorteilhaftes Mehrstufengetriebe mit zwei Schalteinheiten darstellen, welches zur Schaltung von zwei Vorwärtsgetriebegängen vorgesehen ist.

### Bezugszeichenliste

- 10: Elektromotor
- 11: Achsantrieb
- 12: Mehrstufengetriebe
- 13: Getriebeeingangselement
- 14: Getriebeausgangselement
- 15: Getriebegehäuse
- 16: Getriebeelement
- 17: Getriebeelement
- 17': Getriebeelement
- 18: Getriebeelement
- 18': Getriebeelement
- 19: Getriebeelement
- P1: Planetenradstufe
- P11: Sonnenrad
- P12: Planetenradträger
- P13: Hohlrad
- P14: Planetenräder
- P2: Planetenradstufe
- P21: Sonnenrad
- P22: Planetenradtäger
- P23: Hohlrad
- P24: Planetenräder
- P3: Planetenradstufe
- P31: Sonnenrad
- P32: Planetenradträger
- P33: Hohlrad
- P34: Planetenräder
- S1: Schalteinheit
- S11: Kopplungselement
- S12: Kopplungselement
- S2: Schalteinheit
- S21: Kopplungselement
- S22: Kopplungselement
- S3: Schalteinheit
- S31: Kopplungselement
- S32: Kopplungselement
- V1: Vorwärtsgetriebegang
- V2: Vorwärtsgetriebegang
- V3: Vorwärtsgetriebegang

## Patentansprüche

1. Antriebsvorrichtung, insbesondere für ein Elektrofahrzeug, mit zumindest einem Elektromotor (10a-e), mit zumindest einem Achsantrieb (11a-e) und mit einem zwischen dem Elektromotor (10a-e) und dem Achsantrieb (11a-e) angeordneten Mehrstufengetriebe (12a-e), das genau drei wirkungsmäßig miteinander verbundene Planetenradstufen (P1a-e, P2a-e, P3a-e) mit Sonnenrädern (P11a-e, P21a-e, P31a-e), Hohlrädern (P13a-e, P23a-e, P33a-e) und Planetenradträgern (P12a-e, P22a-e, P32a-e), zwei Schalteinheiten (S1a-e, S2a-e), ein Getriebeeingangselement (13a-e) zur drehfesten Anbindung des Elektromotors (10a-e) sowie ein Getriebeausgangselement (14a-e) zur drehfesten Anbindung des Achsantriebs (11a-e) aufweist, wobei das Getriebeeingangselement (13a-e) permanent drehfest mit dem Sonnenrad (P11a-e) der ersten Planetenradstufe (P1a-e) verbunden ist, das Getriebeausgangselement (14a-e) permanent drehfest mit dem Planetenradträger (P32a-e) der dritten Planetenradstufe (P3a-e) verbunden ist, sowie der Planetenradträger (P12a-e) der ersten Planetenradstufe (P1a-e) und das Sonnenrad (P31a-e) der dritten Planetenradstufe (P3a-e) permanent drehfest miteinander verbunden sind,
wobei das Hohlrad (P13a; P13b; P13d; P13e) der ersten Planetenradstufe (P1a; P1b; P1d; P1e) und das Sonnenrad (P21a; P21b; P21d; P21e) der zweiten Planetenradstufe (P2a; P2b; P2d; P2e) permanent drehfest miteinander verbunden sind
**dadurch gekennzeichnet, dass**
der Planetenradträger (P22a; P22c; P22d) der zweiten Planetenradstufe (P2a; P2c; P2d) und der Planetenradträger (P32a; P32c; P32d) der dritten Planetenradstufe (P3a; P3c; P3d) permanent drehfest miteinander verbunden sind oder dass eine dritte Schalteinheit (S3b; S3e) dazu vorgesehen ist, den Planetenradträger (P22b; P22e) der zweiten Planetenradstufe (P2b; P2e) drehfest mit dem Planetenradträger (P32b; P32e) der dritten Planetenradstufe (P3b; P3e) zu verbinden.

2. Antriebsvorrichtung nach Anspruch 1,
**dadurch gekennzeichnet, dass**
das Hohlrad (P23b; P23c; P23e) der zweiten Planetenradstufe (P2b; P2c; P2e), der Planetenradträger (P12b; P12c; P12e) der ersten Planetenradstufe (P1b; P1c; P1e) und das Sonnenrad (P31b; P31c; P31e) der dritten Planetenradstufe (P3b; P3c; P3e) permanent drehfest miteinander verbunden sind.

3. Antriebsvorrichtung nach Anspruch 1,
**dadurch gekennzeichnet, dass**
die dritte Schalteinheit (S3a; S3d) dazu vorgesehen ist, das Hohlrad (P23a; P23d) der zweiten Planetenradstufe (P2a; P2d) drehfest mit dem Planetenradträger (P12a; P12d) der ersten Planetenradstufe (P1a; P1d) und dem Sonnenrad (P31a; P31d) der dritten Planetenradstufe (P3a; P3d) drehfest zu verbinden und dass der Planetenradträger (P22a; P22d) der zweiten Planetenradstufe (P2a; P2d) und der Planetenradträger (P32a; P32d) der dritten Planetenradstufe (P3a; P3d) permanent drehfest miteinander verbunden sind.

4. Antriebsvorrichtung nach Anspruch 1,
**dadurch gekennzeichnet, dass**
die dritte Schalteinheit (S3c) dazu vorgesehen ist, das Hohlrad (P13c) der ersten Planetenradstufe (P1c) und das Sonnenrad (P21c) der zweiten Planetenradstufe (P2c) drehfest miteinander zu verbinden und dass der Planetenradträger (P22c) der zweiten Planetenradstufe (P2c) und der Planetenradträger (P32c) der dritten Planetenradstufe (P3c) permanent drehfest miteinander verbunden sind.

5. Antriebsvorrichtung nach einem der vorhergehenden Ansprüche,
**dadurch gekennzeichnet, dass**
die erste Schalteinheit (S1a-e) dazu vorgesehen ist, das Hohlrad (P33a-e) der dritten Planetenradstufe (P3a-e) gehäusefest anzuordnen.

6. Antriebsvorrichtung nach einem der vorhergehenden Ansprüche
**dadurch gekennzeichnet, dass**
die zweite Schalteinheit (S2a-e) dazu vorgesehen ist, zumindest das Hohlrad (P31a-e) der ersten Planetenradstufe (P1a-e) gehäusefest anzuordnen.

7. Antriebsvorrichtung nach einem der vorhergehenden Ansprüche,
**dadurch gekennzeichnet, dass**
der Achsantrieb (11a) zumindest eine Achswelle aufweist, die das Getriebeeingangselement (13a), das Getriebeausgangselement (14a) und/oder den Elektromotor (10a) durchsetzt.

## Claims

1. Drive device, in particular for an electric vehicle, with at least one electric motor (10a-e), with at least one final drive (11a-e) and with a multi-stage gearbox (12a-e), which is located between the electric motor (10a-e) and the final drive (11a-e) and which has precisely three planetary stages (P1a-e. P2a-e, P3a-e) effectively connected to one another with sun gears (P11a-e. P21a-e, P31a-e), ring gears (P13a-e, P23a-e, P33a-e) and planet carriers (P12a-e. P22a-e, P32a-e), two shifting units (S1a-e, S2a-e), a gearbox input element (13a-e) for the non-rotatable connection of the electric motor (10a-e) and a gearbox output element (14a-e) for the non-rotatable connection of the final drive (11a-e), wherein the gearbox input element (13a-e) is permanently and non-rotatably connected to the sun gear (P11a-e) of the first planetary stage (P1a-e), the gearbox output element (14a-e) is permanently and non-rotatably connected to the planet carrier (P32a-e) of the third planetary stage (P3a-e) and the planet carrier (P12a-e) of the first planetary stage (P1a-e) and the sun gear (P31a-e) of the third planetary stage (P3a-e) are permanently and non-rotatably connected to each other, wherein the ring gear (P13a; P13b; P13d; P13e) of the first planetary stage (P1a; P1b; P1d; P1e) and the sun gear (P21a; P21b; P21d; P21e) of the second planetary stage (P2a; P2b; P2d; P2e) are permanently and non-rotatably connected to each other,
**characterised in that**
the planet carrier (P22a; P22c; P22d) of the second planetary stage (P2a; P2c; P2d) and the planet carrier (P32a; P32c; P32d) of the third planetary stage (P3a; P3c; P3d) are permanently and non-rotatably connected to each other and/or **in that** a third shifting unit (S3b; S3e) is provided to connect the planet carrier (P22b; P22e) non-rotatably to the planet carrier (P32b; P32e) of the third planetary stage (P3b; P3e).

2. Drive device according to claim 1,
**characterised in that**
the ring gear (P23b; P23c; P23e) of the second planetary stage (P2b; P2c; P2e), the planet carrier (P12b; P12c; P12e) of the first planetary stage (P1b; P1e; P1e) and the sun gear (P31b; P31c; P31e) of the third planetary stage (P3b; P3c; P3e) are permanently and non-rotatably connected to one another.

3. Drive device according to claim 1,
**characterised in that**
the third shifting unit (S3a; S3d) is provided to connect the ring gear (P23a; P23d) of the second planetary stage (P2a; P2d) non-rotatably to the planet carrier (P12a; P12d) of the first planetary stage (P1a; P1d) and to the ring gear (P31a; P31d) of the third planetary stage (P3a; P3d) and **in that** the planet carrier (P22a; P22d) of the second planetary stage (P2a; P2d) and the planet carrier (P32a; P32d) of the third planetary stage (P3a; P3d) are permanently and non-rotatably connected to each other.

4. Drive device according to claim 1,
**characterised in that**
the third shifting unit (S3c) is provided to connect the ring gear (P13c) of the first planetary stage (P1c) and the sun gear (P21c) of the second planetary stage (P2c) non-rotatably to each other and **in that** the planet carrier (P22c) of the second planetary stage (P2c) and the planet carrier (P32c) of the third planetary stage (P3c) are permanently and non-rotatably connected to each other.

5. Drive device according to any of the preceding claims,
**characterised in that**
the first shifting unit (S1a-e) is provided to locate the ring gear (P33a-e) of the third planetary stage (P3a-e) in a fixed position in the housing.

6. Drive device according to any of the preceding claims,
**characterised in that**
the second shifting unit (S2a-e) is provided to locate at least the ring ear (P31a-e) of the first planetary stage (P1a-e) in a fixed position in the housing.

7. Drive device according to any of the preceding claims,
**characterised in that**
the final drive (11a) has at least one drive shaft passing through the gearbox input element (13a), the gearbox output element (14a) and/or the electric motor (10a).

## Revendications

1. Dispositif de propulsion, en particulier pour un véhicule électrique, comprenant au moins un moteur électrique (10a-e), au moins un pont moteur (11a-e) et une transmission à niveaux multiples (12a-e) disposée entre le moteur électrique (10a-e) et le pont moteur (11a-e), qui présente exactement trois étages de satellites (P1a-e, P2a-e, P3a-e) reliés fonctionnellement les uns aux autres, avec des pignons planétaires (P11a-e, P21a-e, P31 a-e), des couronnes (P13a-e, P23a-e, P33a-e) et des portes-satellites (P12a-e, P22a-e, P32a-e), deux unités de commutation (S1a-e, S2a-e), un élément d'entrée de transmission (13a-e) pour accoupler solidaire en rotation le moteur électrique (10a-e) ainsi qu'un élément de sortie de transmission (14a-e) pour accoupler solidaire en rotation le pont moteur (11a-e), l'élément d'entrée de transmission (13a-e) étant accouplé solidaire en rotation en permanence au pignon planétaire (P11a-e) du premier étages de satellites (P1a-e), l'élément de sortie de transmission (14a-e) étant accouplé solidaire en rotation en permanence avec le porte-satellites (P32a-e) du troisième étage de satellites (P3a-e), ainsi que le porte-satellites (P12a-e) du premier étage de satellites (P1a-e) et le pignon planétaire (P31a-e) du troisième étage de satellites (P3a-e),
la couronne (P13a ; P13b, P13d, P13e) du premier étage de satellites (P1a, P1b, P1d, P1e) et le pignon satellite (P21a, P21b, P21d, P21e) du deuxième étage de satellites (P2a, P2b, P2d, P2e) étant accouplés solidaire en rotation en permanence,
**caractérisé en ce que**
le porte-satellites (P22a P22c, P22d) du deuxième étage de satellites (P2a, P2c, P2d) et du porte-satellites (P32a, P32c, P32d) du troisième étage de satellites (P3a, P3c, P3d) étant accouplés en permanence solidaire en rotation les uns avec les autres ou **en ce qu'**une troisième unité de commutation (S3b S3e) sert à accoupler le porte-satellites (P22b, P22e) du deuxième étage de satellites (P2b, P2e) solidaire en rotation au porte-satellites (P32b, P32e) du troisième étage de satellites (P3b, P3e).

2. Dispositif de propulsion selon la revendication 1, **caractérisé en ce que** la couronne (P23b, P23c, P23e) du deuxième étages de satellites (P2b P2c, P2e), le porte-satellites (P12b, P12c, P12e) du premier étage de satellites (P1b, P1c, P1e) et la couronne (P31b, P31c, P31e) du troisième étage de satellites (P3b, P3c, P3e) sont accouplés en permanence solidaire en rotation les uns avec les autres.

3. Dispositif d'entraînement selon la revendication 1, **caractérisé en ce que** la troisième unité de commutation (S3a, S3d) sert à relier solidaire en rotation la couronne (P23a, P23d) du deuxième étage de satellites (P2a, P2d) avec le porte-satellites (P12a, P12d) du premier étage de satellites (P1a, P1d) et avec la couronne (P21a, P31d) du troisième étage de satellites (P3a, P3d) et **en ce que** le porte-satellites (P22a, P22d) du deuxième étage de satellites (P2a, P2d) et le porte-satellites (P32a, P32d) du troisième étage de satellites (P3a, P3d) sont accouplés en permanence solidaire en rotation les uns avec les autres.

4. Dispositif d'entraînement selon la revendication 1, **caractérisé en ce que** la troisième unité de commutation (S3c) sert à accoupler solidaire en rotation la couronne (P13c) du premier étage de satellites (P1 c) et la couronne (P21c) du deuxième étage de satellites (P2c) l'une avec l'autre et **en ce que** le porte-satellites (P22c) du deuxième étage de satellites (P2c) et le porte-satellites (P32c) du troisième étage de satellites (P3c) sont accouplés en permanence solidaire en rotation l'un avec l'autre.

5. Dispositif d'entraînement selon l'une quelconque des revendications précédentes, **caractérisé en ce que** la première unité de commutation (S1a-e) sert ce que la couronne (P33a-e) du troisième étage de satellites (P3a-e) soit solidaire du carter.

6. Dispositif d'entraînement selon l'une quelconque des revendications précédentes, **caractérisé en ce que** la seconde unité de commutation (S2a-e) sert à ce qu'au moins la couronne (P31a-e) du premier étage de satellites (P1a-e) soit solidaire du carter.

7. Dispositif d'entraînement selon l'une quelconque des revendications précédentes, **caractérisé en ce que** le pont moteur (11a) présente au moins un arbre d'essieu qui engrène l'élément d'entrée de transmission (13a), l'élément de sortie de transmission (14a) et/ou le moteur électrique (10a).
